# EUROPÄISCHE PATENTSCHRIFT

(11) **EP 4 034 791 B1**
(45) Veröffentlichungstag und Bekanntmachung des Hinweises auf die Patenterteilung: **26.06.2024**
(21) Anmeldenummer: 20743650.2
(22) Anmeldetag: 17.07.2020
(51) Int. Cl.: F16L 13/00, F16L 13/14, F16L 23/06, F16L 23/18, B21D 39/04, B30B 7/00, F16J 15/12, F16L 23/024, F16L 23/04

(54) **VERFAHREN ZUR HERSTELLUNG EINER ROHRLEITUNGSANORDNUNG UND ROHRLEITUNGSANORDNUNG**
METHOD FOR PRODUCING A PIPELINE ARRANGEMENT, AND PIPELINE ARRANGEMENT
PROCÉDÉ DE FABRICATION D'UN AGENCEMENT DE CANALISATION ET AGENCEMENT DE CANALISATION

(30) Priorität: 25.09.2019 DE 102019214700
(43) Veröffentlichungstag der Anmeldung: 03.08.2022
(73) Patentinhaber: Glatt Gesellschaft mit beschränkter Haftung, 79589 Binzen (DE)
(72) Erfinder: NOWAK, Jesko Jay, 79540 Lörrach (DE); NOWAK, Reinhard, 79540 Lörrach (DE)
(74) Vertreter: Patentanwälte Magenbauer & Kollegen Partnerschaft mbB
(86) Internationale Anmeldenummer: PCT/EP2020/070272
(87) Internationale Veröffentlichungsnummer: WO 2021/058164

(56) Entgegenhaltungen:
- DE-A1- 19 507 854
- GB-A- 692 571
- JP-U- S49 115 712
- US-A1- 2014 361 535

## Beschreibung

Die Erfindung betrifft ein Verfahren zur Herstellung einer Rohrleitungsanordnung umfassend zwei eine Rohrleitungsmittelachse aufweisende Rohrleitungseinheiten, wobei die Rohrleitungseinheit eine über eine Rohrleitungsaußenoberfläche, eine Rohrleitungsstirnfläche und einen Rohrleitungsaußendurchmesser verfügende Rohrleitung und einen einen Rohrstutzeninnendurchmesser aufweisenden Rohrstutzen, der über einen eine Flanschabschnittsstirnfläche aufweisenden Flanschabschnitt und einen eine Rohrabschnittsinnenoberfläche aufweisenden Rohrabschnitt verfügt, umfasst, einer axial zwischen den Flanschabschnittsstirnflächen der Rohrstutzen angeordneten Dichtung und einer die Flanschabschnitte der Rohrstutzen der zwei Rohrleitungseinheiten axial miteinander verspannenden Spanneinrichtung, wobei der Rohrstutzen mindestens bis zu einer Bündigkeit der Flanschabschnittsstirnfläche und der Rohrleitungsstirnfläche auf die Rohrleitung aufgesteckt wird, die Rohrleitung in einem durch ein radiales Aufweiten der Rohrleitung erzeugten Presssitz in dem Rohrstutzen fixiert wird und die entstandenen Rohrleitungseinheiten axial durch Verspannen der Flanschabschnitte der Rohrstutzen zur Rohrleitungsanordnung verspannt werden.

Ferner betrifft die Erfindung eine Rohrleitungsanordnung umfassend zwei eine Rohrleitungsmittelachse aufweisende Rohrleitungseinheiten, wobei die Rohrleitungseinheit eine über eine Rohrleitungsaußenoberfläche, eine Rohrleitungsstirnfläche und einen Rohrleitungsaußendurchmesser verfügende Rohrleitung und einen einen Rohrstutzeninnendurchmesser aufweisenden Rohrstutzen, der über einen eine Flanschabschnittsstirnfläche aufweisenden Flanschabschnitt und einen eine Rohrabschnittsinnenoberfläche aufweisenden Rohrabschnitt verfügt, umfasst, einer axial zwischen den Flanschabschnittsstirnflächen der Rohrstutzen angeordneten Dichtung und einer die Flanschabschnitte der Rohrstutzen der zwei Rohrleitungseinheiten axial miteinander verspannenden Spanneinrichtung, wobei der Rohrstutzen mindestens bis zu einer Bündigkeit der Flanschabschnittsstirnfläche und der Rohrleitungsstirnfläche auf die Rohrleitung aufgesteckt ist und die Rohrleitung in einem durch ein radiales Aufweiten der Rohrleitung erzeugten Presssitz in dem Rohrstutzen fixiert ist.

Bisher werden druckbeaufschlagte Rohrleitungsanordnungen nach DIN 11864-3 mittels Nut- und Bundklemmstutzen realisiert, wobei diese jeweils an ein Rohrleitungsende geschweißt werden. Die Schweißnähte der druckbeaufschlagte Rohrleitungsanordnung müssen anschließend aufwendig nachbehandelt und geprüft werden. Eine Dichtung, insbesondere ein O-Ring wird in den Nutklemmstutzen eingelegt. Eine Spanneinrichtung verbindet Nut- und Bundklemmstutzen, wobei ein am Nutklemmstutzen angeordneter mechanischer Anschlag dafür sorgt, dass der O-Ring definiert angepresst wird. Durch den Anpressdruck wird der O-Ring teilweise aus der Nut drückt, sodass sich ein definierter Übergang zwischen Nut- und Bundklemmstutzen im Inneren der Rohrleitungsanordnung ergibt.

Entsprechend einer weiteren nach DIN 32676 hergestellten Rohrleitungsanordnung wird diese durch zwei eine Dichtung aufnehmende Anschweißstutzen realisiert. Ein Nachteil dieser Rohrleitungsanordnung ist es, dass die Schweißnähte der druckbeaufschlagten Rohrleitungsanordnung anschließend aufwendig nachbehandelt und geprüft werden müssen. Zudem nachteilig ist, dass die Dichtung keinen definierten Anpressdruck aufweist, sondern dieser durch die Spanneinrichtung bestimmt wird.

GB 692571 A betrifft eine ein neues oder verbessertes Verfahren und Mittel zum Verbinden von starren oder im Wesentlichen starren Rohren oder Leitungen. Hierbei wird auf Rohrleitungen jeweils ein mittels Spanneinrichtung axial verspannbarer Flansch aufgesetzt, wobei Rohrleitung und Flansch in Umfangsrichtung verformt werden, sodass ein Presssitz entsteht.

In der JP S49115712 U wird ein Verfahren zur Verbindung zweier Rohrleitungen mit jeweils einem Flansch dargestellt, wobei auf der Innenfläche des Flansches eine Aussparung angeordnet ist in die die Rohrleitung zur Verbindung aufgeweitet wird.

DE 195 07 854 A1 offenbart eine mehrteilige Dichtungsvorrichtung, insbesondere zum Abdichten von Flanschverbindungen eines Rohrleitungssystems, bestehend aus zwei Überwurfflanschen und zwei Bundflanschen zur Verbindung von Rohrleitungen. Zur Vermeidung von Undichtigkeiten aufgrund von Verspannungen und einer unterschiedlichen Verpressung der vorgenannten Flanschteile ist erfindungsgemäß vorgesehen, dass die aneinander liegenden Radialflächen der Überwurfflansche und die korrespondierenden Auflageflächen der Überwurf- und Bundflansche nach der Montage spaltfrei und parallel angeordnet sind. Durch die Verwendung von Überwurfflanschen, welche nach der Montage mit ihren Radialflächen spaltfrei und parallel aufeinanderliegen, wird eine Verformung der Flanschteile weitestgehend ausgeschlossen und ein gleichmäßiger Anpressdruck erzielt, wodurch beispielsweise eine Verkleinerung der Flanschverbindung ermöglicht wird.

In der US 2014/0361535 A wird ein Verfahren zur Verbindung eines ersten Anschlussstücks mit einem zweiten Anschlussstück zur Bereitstellung einer Fluidkopplung zwischen dem ersten Anschlussstück und dem zweiten Anschlussstück gezeigt, wobei das Verfahren das Bereitstellen eines ersten Anschlussstücks mit einer äußeren Oberfläche, das Bereitstellen eines zweiten Anschlussstücks mit einer inneren Oberfläche und einer ringförmigen Nut, die an der inneren Oberfläche vorgesehen ist, das Positionieren des ersten Anschlussstücks mindestens teilweise innerhalb des zweiten Anschlussstücks und Verformen des ersten Anschlussstücks in einer allgemeinen ringförmigen Richtung zur Bildung einer ringförmigen Wulst, die sich mindestens teilweise in die ringförmige Nut erstreckt, um das erste Anschlussstück mit dem zweiten Anschlussstück zu verbinden.

Aufgabe der Erfindung ist es daher sowohl ein Verfahren zur Herstellung einer Rohrleitungsanordnung als auch eine Rohrleitungsanordnung selbst bereitzustellen, wobei eine Nachbehandlung und Überprüfung der Schweißnähte der druckbeaufschlagten Rohrleitungsanordnung nicht notwendig ist.

Diese Aufgabe wird bei einem Verfahren eingangs genannter Art dadurch gelöst, dass die Dichtung einen Dichtungseinsatz aufweist und nach dem Verspannen der Rohrleitungseinheiten zur Rohrleitungsanordnung einen definierten Übergang zwischen den zwei miteinander verspannten Rohrleitungseinheiten ausbildet, wobei der durch mittels des Dichtungseinsatzes festgelegte Anpresskräfte definierte Übergang so ausgebildet wird, dass eine Wölbung gegenüber einem Rohrleitungsinnendurchmesser einen stumpfen Winkel bildet. Der Vorteil des bevorzugten Verfahrens liegt darin, dass die hergestellte Rohranordnung eine einfache Verbindung zweier Rohrleitungseinheiten darstellt. Hierdurch werden Kosten und Arbeitsschritte bei der Herstellung der Rohrleitungsanordnung eingespart. Zudem sind die herkömmlicherweise bei der Verbindungstechnik von Rohrleitungsanordnungen anfallenden Nachbearbeitungen, bspw. aufgrund von Schweißverzug, bei dem neuen Verfahren zur Herstellung der Rohrleitungsanordnung nicht notwendig. Aufgrund ortsungebundener Herstellungswerkzeuge kann auch die Herstellung ortsunabhängig sein, wodurch eine Abhängigkeit von bspw. Umgebungsluft und Feuchtigkeit, die beim Schweißen von zentraler Bedeutung ist, entfällt. Überdies findet so ein Ansammeln von Rückständen des durch die Rohranordnung strömenden Mediums nicht statt. Die Dichtung ist bevorzugt als Flachdichtung ausgebildet. Als Dichtungswerkstoff stehen Werkstoffe wie z. B. Elastomere, Pressfaser, Aramidfaser, Kohlenstofffaser, Mineralfaser, Metall, Kupfer zur Verfügung.

Nach einer diesbezüglichen vorteilhaften Weiterbildung des Verfahrens werden die Rohrleitung und der Rohrstutzen bereitgestellt, wobei der Rohrleitungsaußendurchmesser größer ist als der Rohrstutzeninnendurchmesser, sodass unmittelbar beim Aufstecken des Rohrstutzens auf die Rohrleitung eine Presspassung erzeugt wird. Durch die Presspassung wird eine verbesserte kraftschlüssige Verbindung zwischen Rohrleitung und Rohrstutzen hergestellt. Bevorzugt wird vor dem Aufstecken des Rohrstutzens auf die Rohrleitung der Rohrstutzen erwärmt und/oder die Rohrleitung gekühlt wird oder umgekehrt. Hierdurch wird ein einfacheres Pressfügen von Rohrleitung und Rohrstutzen ermöglicht.

Weiterhin wird bevorzugt vor dem radialen Aufweiten der Rohrleitung die Rohrabschnittsinnenoberfläche und/oder die Rohrleitungsaußenoberfläche zumindest teilweise strukturiert, sodass die Rohrleitung unmittelbar nach einem durch ein radiales Aufweiten der Rohrleitung erzeugten Presssitz in dem Rohrstutzen auch formschlüssig fixiert wird. Durch eine Strukturierung der zumindest teilweisen Rohrabschnittsinnenoberfläche und/oder die Rohrleitungsaußenoberfläche, bspw. durch Rillen und Erhebungen in den unterschiedlichsten Mustern, wird neben dem durch das Aufweiten der Rohrleitung erzielten Formschluss zusätzlich noch ein Kraftschluss bewirkt und somit eine höherwertige Verbindung zwischen Rohrleitung und -stutzen erreicht.

Auch ummantelte Dichtungen, insbesondere ummantelte Flachdichtungen, sind bevorzugt, wobei diese einen von einer PTFE- oder Metallhülle, vorzugsweise Stahl oder korrosionsbeständige Nickellegierungen, umhüllten Kern (beliebiger Flachdichtungswerkstoff bspw. Faserverbund, PTFE usw.) umfasst. Die Ummantelung schützt den Kern gegen chemischen Angriff vom abzudichtenden Medium.

Entsprechend einer vorteilhaften Fortbildung des Verfahrens ist der Dichtungseinsatz konfiguriert, um einen axialen Mindestabstand zwischen den zwei Rohrleitungseinheiten während des Verspannens der Rohrleitungseinheiten zur Rohrleitungsanordnung zu definieren. Die Einstellung eines axialen Mindestabstandes mittels der einen Dichtungseinsatz umfassenden Dichtung zwischen den zwei Rohrleitungseinheiten hat den Vorteil, dass der maximale Anpressdruck der Dichtfläche vorgebbar ist. Zudem können durch den nicht unterschreitbaren Mindestabstand zwischen den zwei Rohrleitungseinheiten aufgrund des Dichtungseinsatzes Nacharbeiten an den Rohrleitungseinheiten, insbesondere an den diesbezüglichen Rohren, entfallen.

Darüber hinaus wird die Aufgabe der eingangs genannten Art dadurch gelöst, dass die Dichtung einen Dichtungseinsatz aufweist und konfiguriert ist, um einen definierten Übergang zwischen den zwei miteinander verspannten Rohrleitungseinheiten auszubilden, wobei der durch mittels des Dichtungseinsatzes festgelegte Anpresskräfte definierte Übergang so ausgebildet ist, dass eine Wölbung gegenüber einem Rohrleitungsinnendurchmesser einen stumpfen Winkel bildet. Hierdurch findet ein Ansammeln von Rückständen des durch die Rohrleitungsanordnung strömenden Mediums oder der durch die Rohrleitungsanordnung strömenden Medien nicht statt. Die bevorzugte Rohrleitungsanordnung hat den Vorteil, dass die hergestellte Rohranordnung eine einfache Verbindung zweier Rohrleitungseinheiten darstellt, wodurch sowohl Kosten als auch Arbeitsschritte bei der Herstellung der Rohrleitungsanordnung eingespart werden. Bei der bisherigen Verbindungstechnik von Rohrleitungsanordnungen fallen bspw. durch eventuellen Schweißverzug Nachbearbeitungen der Rohrleitungsanordnung, an, die bei der bevorzugten Rohrleitungsanordnung entfallen. Zudem ist das Verfahren zur Herstellung der Rohrleitungsanordnung im Vergleich zu den bisher bekannten Herstellungsverfahren nicht ortsgebunden und kann daher überall durchgeführt werden.

Bevorzugt wird der Rohrstutzen derart auf die Rohrleitung aufgesteckt, dass die Rohrleitung mit einer Länge von 0,5 mm bis 2 mm, besonders bevorzugt 0,5 mm bis 1 mm, durch den Rohrstutzen durchgesteckt wird. Somit sind Flanschabschnittsstirnfläche und Rohrleitungsstirnfläche nicht bündig, sondern versetzt zueinander angeordnet. Eine solche Anordnung weist den Vorteil auf, dass die Rohrleitungsstirnflächen beim Verspannen der Rohrleitungseinheiten mittels der Spannvorrichtung im Vergleich zu einer bündigen Anordnung von Flanschabschnittsstirnfläche und Rohrleitungsstirnfläche einer größeren Flächenanpresskraft ausgesetzt sind. Hierdurch wird eine höhere Dichtigkeit erreicht.

In einer bevorzugten Ausführung der Rohrleitungsanordnung sind der Rohrleitungsaußendurchmesser und der Rohrstutzeninnendurchmesser ausgebildet, um beim Aufstecken des Rohrstutzens auf die Rohrleitung eine Presspassung herzustellen. Durch die Presspassung wird eine verbesserte kraftschlüssige Verbindung zwischen Rohrleitung und Rohrstutzen hergestellt. Bevorzugt wird vor dem Aufstecken des Rohrstutzens auf die Rohrleitung der Rohrstutzen erwärmt und/oder die Rohrleitung gekühlt wird oder umgekehrt. Hierdurch wird ein einfacheres Pressfügen von Rohrleitung und Rohrstutzen ermöglicht.

Weiter vorteilhaft ist die Rohrabschnittsinnenoberfläche und/oder die Rohrleitungsaußenoberfläche zumindest teilweise strukturiert, sodass die Rohrleitung in einem durch ein radiales Aufweiten der Rohrleitung erzeugten Presssitz in dem Rohrstutzen auch formschlüssig fixiert ist. Durch eine Strukturierung der zumindest teilweisen Rohrabschnittsinnenoberfläche und/oder die Rohrleitungsaußenoberfläche, bspw. durch Rillen und Erhebungen in den unterschiedlichsten Mustern, wird neben dem durch das Aufweiten der Rohrleitung erzielten Formschluss zusätzlich noch ein Kraftschluss bewirkt und somit eine höherwertige Verbindung zwischen Rohrleitung und - stutzen erreicht.

Vorteilhafterweise ist die Spanneinrichtung als Gelenkklammer ausgebildet. Hierdurch ist der auf die zwei Rohrleitungseinheiten wirkende Anpressdruck variabel einstellbar. Zudem ist eine solche Spanneinrichtung kostengünstig. Die Spanneinrichtung kann auch als Flansch-Schrauben-Verbindung ausgebildet sein.

Entsprechend einer weiteren bevorzugten Ausbildung der Rohrleitungsanordnung ist der Dichtungseinsatz konfiguriert, um einen axialen Mindestabstand zwischen den zwei Rohrleitungseinheiten zu definieren. Die Einstellung eines axialen Mindestabstandes mittels der einen Dichtungseinsatz umfassenden Dichtung zwischen den zwei Rohrleitungseinheiten ist vorteilhaft, da der maximale Anpressdruck der Dichtfläche vorgebbar ist. Zudem können durch den nicht unterschreitbaren Mindestabstand zwischen den zwei Rohrleitungseinheiten aufgrund des Dichtungseinsatzes Nacharbeiten an den Rohrleitungseinheiten, insbesondere an den diesbezüglichen Rohren, entfallen.

Bevorzugt weist der Dichtungseinsatz eine als Anschlag ausgebildete Dichtungseinsatzstirnfläche auf. Eine als Anschlag ausgebildete Dichtungseinsatzstirnfläche ermöglicht eine einfache Realisierung zur Begrenzung des Mindestabstandes zwischen den zwei zu verspannenden Rohrleitungseinheiten. Nachfolgend wird die Erfindung anhand der beiliegenden Zeichnung näher erläutert dieser zeigen
- Figur 1: eine Schnittdarstellung einer Rohrleitung und eines Rohrstutzens,
- Figur 2: eine Schnittdarstellung der Rohrleitung und des Rohrstutzens, wobei der Rohrstutzen axial auf die Rohrleitung aufgesteckt ist,
- Figur 3: eine Schnittdarstellung einer Rohrleitungseinheit,
- Figur 4: eine Schnittdarstellung von zwei Rohrleitungseinheiten, wobei zwischen den Rohrleitungseinheiten eine Dichtung angeordnet ist,
- Figur 5: eine einen Ausschnitt A im Bereich von zwei miteinander verspannten Rohrleitungseinheiten aufweisende Schnittdarstellung eines Ausführungsbeispiels einer Rohrleitungsanordnung und
- Figur 6: eine Detailansicht des in Fig. 5 dargestellten Ausschnitts A im Bereich der zwei miteinander verspannten Rohrleitungseinheiten.

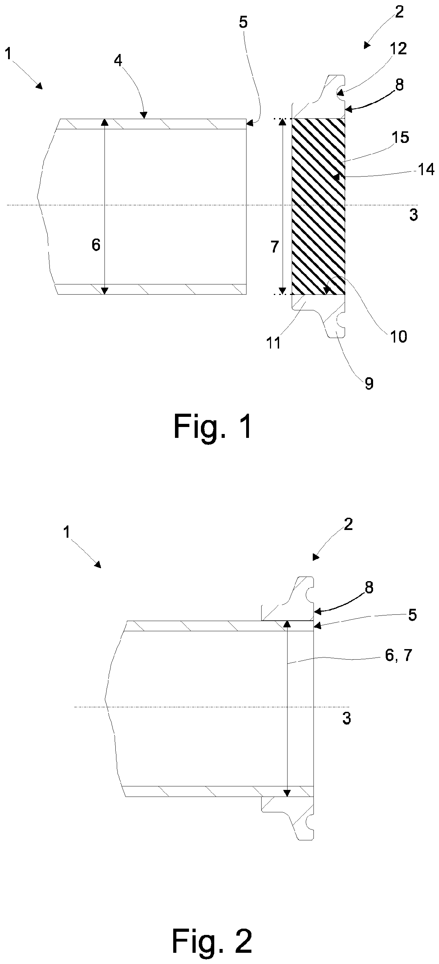

In der Fig. 1 wird eine Schnittdarstellung einer Rohrleitung 1 und eines Rohrstutzens 2 gezeigt, wobei Rohrleitung 1 und Rohrstutzen 2 eine Rohrleitungsmittelachse 3 aufweisen und an dieser ausgerichtet sind.

Die Rohrleitung 1 weist eine Rohrleitungsaußenoberfläche 4, eine Rohrleitungsstirnfläche 5 und einen Rohrleitungsaußendurchmesser 6 auf. Außerdem ist die Rohrleitung 1 entsprechend einer Vorgabe in Bezug auf eine Rohrlänge und eine Rohrbiegung ausgebildet, wobei in der Darstellung der Fig. 1 eine gerade Rohrleitung 1 verwendet wird.

Der Rohrstutzen 2 weist einen Rohrstutzeninnendurchmesser 7 auf und verfügt über einen eine Flanschabschnittsstirnfläche 8 umfassenden Flanschabschnitt 9 und einen eine Rohrabschnittsinnenoberfläche 10 aufweisenden Rohrabschnitt 11. In der Flanschabschnittstirnfläche 8 des Flanschabschnitts 9 ist eine Nut 12 zur teilweisen Aufnahme einer hier nicht gezeigten Dichtung 13 ausgebildet.

Die Dichtung 13 ist bevorzugt als Flachdichtung ausgebildet, wobei als Dichtungswerkstoff Werkstoffe wie z. B. Elastomere, Pressfaser, Aramidfaser, Kohlenstofffaser, Mineralfaser, Metall, Kupfer zur Verfügung stehen. Auch ummantelte Dichtungen 13, insbesondere ummantelte Flachdichtungen, sind bevorzugt, wobei diese einen von einer PTFE- oder Metallhülle, vorzugsweise Stahl oder korrosionsbeständige Nickellegierungen, umhüllten Kern (beliebiger Flachdichtungswerkstoff bspw. Faserverbund, PTFE usw.) umfasst. Die Ummantelung schützt den Kern gegen chemischen Angriff vom abzudichtenden Medium.

Zudem weist die Rohrstutzeninnenoberfläche 10 eine Struktur 14 in Form von Erhebungen 15 auf.

In Fig. 2 wird eine Schnittdarstellung der Rohrleitung 1 und des Rohrstutzens 2 dargestellt, wobei der Rohrstutzen 2 in Achsrichtung der Rohrleitungsmittelachse 3 axial auf die Rohrleitung 1 aufgesteckt ist. Flanschabschnittsstirnfläche 8 und Rohrleitungsstirnfläche 5 sind hierbei bündig zueinander ausgerichtet. Im Ausführungsbeispiel sind der Rohrleitungsaußendurchmesser 6 und der Rohrstutzeninnendurchmesser 7 gleich groß.

In einem anderen nicht gezeigten Ausführungsbeispiel ist der Rohrleitungsaußendurchmesser 6 der Rohrleitung 1 größer als der Rohrstutzeninnendurchmesser 7 des Rohrstutzens 2. Somit wird unmittelbar beim axialen Aufstecken des Rohrstutzens 2 auf die Rohrleitung 1 eine Presspassung erzeugt. Eine solche Presspassung stellt eine kraftschlüssige Verbindung von Rohrleitung 1 und Rohrstutzen 2 her.

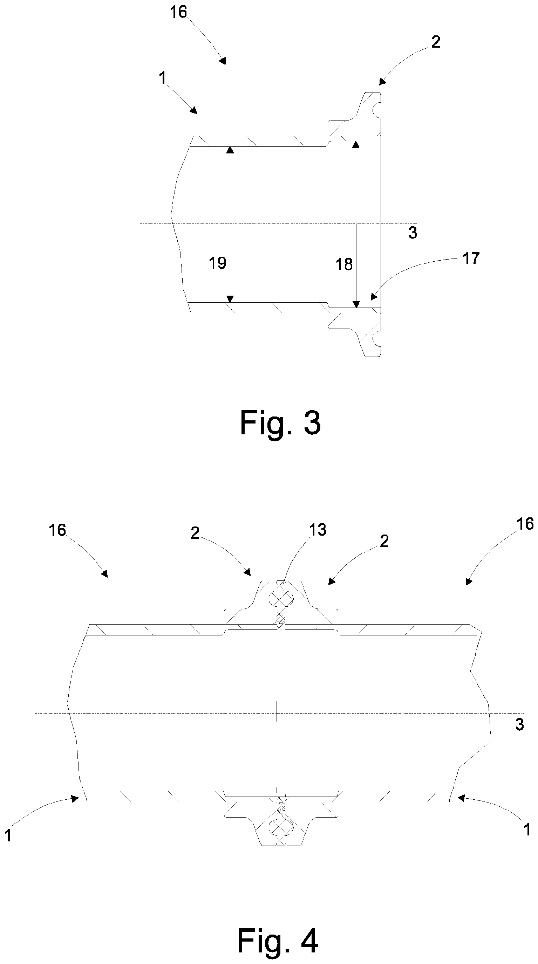

In Fig. 3 wird eine Schnittdarstellung einer Rohrleitungseinheit 16 gezeigt. Die Rohrleitungseinheit 16 umfasst einen auf eine Rohrleitung 1 axial aufgesteckten Rohrstutzen 2. Im Unterschied zur in Fig. 2 dargestellten Anordnung ist in der Rohrleitungseinheit 16 die Rohrleitung 1 durch radiales Aufweiten, insbesondere der Rohrleitungswände, in dem Rohrstutzen 2 mittels Presssitz 17 fixiert. Der Rohrstutzen 2 ist somit kraftschlüssig mit der Rohrleitung 1 verbunden.

Die radiale Aufweitung wird mittels eines Werkzeugs, insbesondere eines Einwalzwerkzeugs, erreicht und wird auch als Haftaufweitung der Rohrleitung 1 bezeichnet. Nach dem radialen Aufweiten ist eine Querschnittsfläche der Rohrleitung 1 im Bereich der Aufweitung größer als eine ursprüngliche Querschnittsfläche der Rohrleitung 1. Somit ist durch das radiale Aufweiten der Rohrleitung 1 der aufgeweitete Rohrleitungsinnendurchmesser 18 im Bereich einer Überlappung von Rohrstutzen 2 und Rohrleitung 1 größer als der ursprüngliche Rohrleitungsdurchmesser 19.

Durch auf der Rohrabschnittsinnenoberfläche 10 angeordnete Struktur 14 in Form von Erhebungen 15 wird durch das Aufweiten der Rohrleitung 1 neben einer kraftschlüssigen auch eine formschlüssige Verbindung zwischen Rohrleitung 1 und Rohrstutzen 2 hergestellt. Die Struktur 14 kann auch in anderer Form ausgebildet sein, bspw. als Nut oder dergleichen.

In anderen nicht dargestellten Ausführungsformen ist vor dem radialen Aufweiten der Rohrleitung 1 die Rohrabschnittsinnenoberfläche 10 und/oder die Rohrleitungsaußenoberfläche 4 zumindest teilweise strukturiert.

Fig. 4 stellt eine Schnittdarstellung von zwei Rohrleitungseinheiten 16 dar, wobei axial zwischen den Rohrleitungseinheiten 16 eine einen Dichtungseinsatz 20 aufweisende Dichtung 13 angeordnet ist.

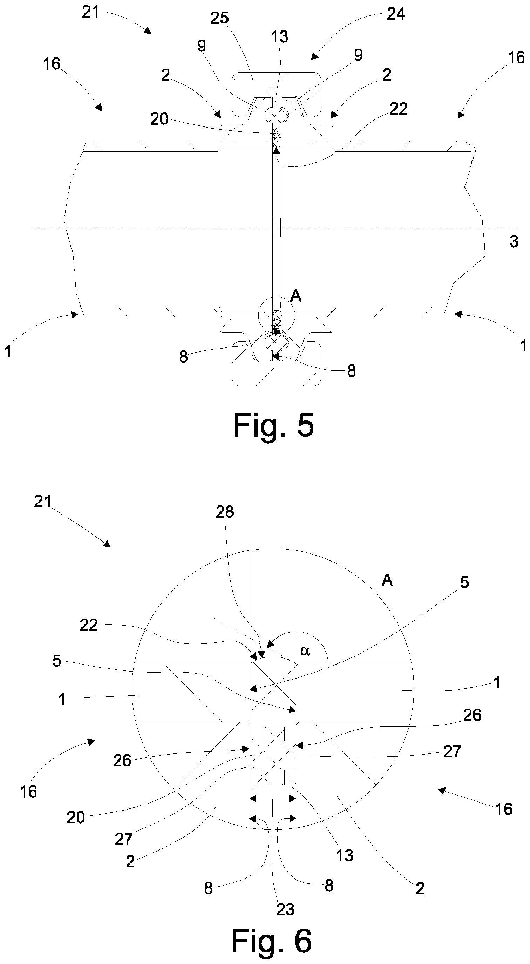

Fig. 5 zeigt eine einen Ausschnitt A im Bereich von zwei miteinander verspannten Rohrleitungseinheiten 16 aufweisende Schnittdarstellung eines Ausführungsbeispiels einer Rohrleitungsanordnung 21.

Die Rohrleitungsanordnung 21 weist eine axial zwischen den an den Flanschabschnitten 9 ausgebildeten Flanschabschnittsstirnflächen 8 der Rohrstutzen 2 angeordnete Dichtung 13 auf. Die Dichtung 13 ist konfiguriert, um einen definierten Übergang 22 zwischen den zwei miteinander verspannten Rohrleitungseinheiten 16 auszubilden. Der definierte Übergang 22 wird durch die beim Verspannen auf die Dichtung 13 wirkenden Anpresskräfte ausgebildet.

Eine nachfolgend beschriebene Detailansicht des in Ausschnitt A der Fig. 2 im Bereich der zwei miteinander verspannten Rohrleitungseinheiten 16 zeigt den definierten Übergang 22 vergrößert. Durch den definierten Übergang 22 wird ein Ansammeln von Rückständen bzw. ein Anlagern von Feststoffen des durch die Rohrleitungsanordnung 21 strömenden Mediums oder der durch die Rohrleitungsanordnung 21 strömenden Medien reduziert bzw. findet nicht statt.

Zudem weist die Dichtung 13 einen Dichtungseinsatz 20 auf. Durch den Dichtungseinsatz 20 wird ein axialer Mindestabstand 23 zwischen den zwei Rohrleitungseinheiten 14 definiert, sodass die zwei Rohrleitungseinheiten 16 beim Verspannen der Rohrleitungsanordnung 21 Anpresskräften ausgesetzt sind, die durch den aufgrund des Dichtungseinsatzes 20 festgelegten, axialen Mindestabstand 23 festgelegt sind.

Die Rohrleitungsanordnung 21 wird mittels Spanneinrichtung 24 axial verspannt. Hierzu werden die Flanschabschnitte 9 der Rohrstutzen 2 der zwei Rohrleitungseinheiten 16 mittels einer Spanneinrichtung 24 axial miteinander verspannt. Im Ausführungsbeispiel ist die Spanneinrichtung 24 vorteilhafterweise als Gelenkklammer 25 ausgebildet. Durch die als Gelenkklammer 25 ausgebildete Spanneinrichtung 24 können die auf die Dichtung 13 wirkenden Anpresskräfte, die auf die Fläche bezogen einem Anpressdruck entsprechen, zusätzlich, z. B. durch eine die Gelenkklammer 25 schließende Flügelmutter oder dergleichen, eingestellt werden. Die Spanneinrichtung 24 kann auch als Flansch-Schrauben-Verbindung ausgebildet sein.

Alternativ können auch Normteile, wie bspw. Messinstrumente, Ventile und Klappen oder dergleichen, hierbei als Rohrleitungseinheit 16 dienen und mit einer anderen zweiten Rohrleitungseinheit 16 zusammen eine Rohrleitungsanordnung 21 ausbilden.

Eine Detailansicht des in Fig. 5 dargestellten Ausschnitts A im Bereich der zwei miteinander verspannten Rohrleitungseinheiten 16 wird in der Fig. 6 dargestellt.

Der Dichtungseinsatz 20 der Dichtung 13 verfügt über eine als Anschlag 26 ausgebildete Dichtungseinsatzstirnfläche 27. Durch den Dichtungseinsatz 20 wird somit zwischen den zwei Rohrleitungseinheiten 16 ein axialer Mindestabstand 23 definierbar oder definiert. Die Rohrleitungsstirnflächen 5 und/oder die Flanschabschnittsstirnflächen 8 grenzen im verspannten Zustand der Rohrleitungsanordnung 21 an die Dichtungseinsatzstirnflächen 27 des Dichtungseinsatzes 20 der Dichtung 13 an. Hierdurch werden der Mindestabstand 23 zwischen den zwei Rohrleitungseinheiten 16 der Rohrleitungsanordnung 21 und somit auch die auf die Dichtung 13 wirkenden Anpresskräfte genau eingestellt.

Der durch die mittels des Dichtungseinsatzes 20 festgelegten Anpresskräfte definierte Übergang 22 ist so ausgebildet, dass die Wölbung 28 gegenüber einem Rohrleitungsinnendurchmesser 18 einen stumpfen Winkel α bildet. Besonders bevorzugt weist der stumpfe Winkel α einen Winkel α zwischen 100° und 170°, ganz besonders bevorzugt zwischen 120° und 150° auf. Hierdurch wird erreicht, dass Rückstände des die Rohrleitungsanordnung 21 durchströmenden Mediums oder der die Rohrleitungsanordnung 21 durchströmenden Medien reduziert bzw. verhindert werden.

Das bevorzugte Verfahren zur Herstellung der Rohrleitungsanordnung 21 umfassend zwei eine Rohrleitungsmittelachse 3 aufweisende Rohrleitungseinheiten 16, wobei die Rohrleitungseinheit 16 eine über eine Rohrleitungsaußenoberfläche 4, eine Rohrleitungsstirnfläche 5 und einen Rohrleitungsaußendurchmesser 6 verfügende Rohrleitung 1 und einen einen Rohrstutzeninnendurchmesser 7 aufweisenden Rohrstutzen 2, der über einen eine Flanschabschnittsstirnfläche 8 aufweisenden Flanschabschnitt 9 und einen eine Rohrabschnittsinnenoberfläche 10 aufweisenden Rohrabschnitt 11 verfügt, umfasst, einer axial zwischen den Flanschabschnittsstirnflächen 8 der Rohrstutzen 2 angeordneten Dichtung 13 und einer die Flanschabschnitte 11 der Rohrstutzen 2 der zwei Rohrleitungseinheiten 16 axial miteinander verspannenden Spanneinrichtung 24, wobei a) der Rohrstutzen 2 mindestens bis zu einer Bündigkeit der Flanschabschnittsstirnfläche 8 und der Rohrleitungsstirnfläche 5 auf die Rohrleitung 1 aufgesteckt wird, b) die Rohrleitung 1 in einem durch ein radiales Aufweiten der Rohrleitung 1 erzeugten Presssitz 17 in dem Rohrstutzen 2 fixiert wird und c) die entstandenen Rohrleitungseinheiten 16 axial durch Verspannen der Flanschabschnitte 9 der Rohrstutzen 2 zur Rohrleitungsanordnung 21 verspannt werden.

Bevorzugt, aber nicht dargestellt, wird der Rohrstutzen 2 derart auf die Rohrleitung 1 aufgesteckt, dass die Rohrleitung 1 mit einer Länge von 0,5 mm bis 2 mm, besonders bevorzugt 0,5 mm bis 1 mm, durch den Rohrstutzen 2 durchgesteckt wird. Somit sind Flanschabschnittsstirnfläche 8 und Rohrleitungsstirnfläche 5 nicht bündig zueinander ausgerichtet, sondern versetzt zueinander angeordnet. Hierdurch werden die Rohrleitungsstirnflächen 5 beim Verspannen der Rohrleitungseinheiten 16 mittels der Spannvorrichtung 24 im Vergleich zu einer bündigen Anordnung von Flanschabschnittsstirnfläche 8 und Rohrleitungsstirnfläche 5 einer größeren Flächenanpresskraft ausgesetzt, sodass eine höhere Dichtigkeit erreicht wird.

Bevorzugt wird vor dem Aufstecken des Rohrstutzens 2 auf die Rohrleitung 1 der Rohrstutzen 2 erwärmt und/oder die Rohrleitung 1 gekühlt. Auch eine Kühlung des Rohrstutzens 2 und/oder eine Erwärmung der Rohrleitung 1 ist ausführbar.

## Patentansprüche

1. Verfahren zur Herstellung einer Rohrleitungsanordnung (21) umfassend zwei eine Rohrleitungsmittelachse (3) aufweisende Rohrleitungseinheiten (16), wobei die Rohrleitungseinheit (16) eine über eine Rohrleitungsaußenoberfläche (4), eine Rohrleitungsstirnfläche (5) und einen Rohrleitungsaußendurchmesser (6) verfügende Rohrleitung (1) und einen einen Rohrstutzeninnendurchmesser (7) aufweisenden Rohrstutzen (2), der über einen eine Flanschabschnittsstirnfläche (8) aufweisenden Flanschabschnitt (9) und einen eine Rohrabschnittsinnenoberfläche (10) aufweisenden Rohrabschnitt (11) verfügt, umfasst, einer axial zwischen den Flanschabschnittsstirnflächen (8) der Rohrstutzen (2) angeordneten Dichtung (13) und einer die Flanschabschnitte (9) der Rohrstutzen (2) der zwei Rohrleitungseinheiten (16) axial miteinander verspannenden Spanneinrichtung (24), wobei der Rohrstutzen (2) mindestens bis zu einer Bündigkeit der Flanschabschnittsstirnfläche (8) und der Rohrleitungsstirnfläche (5) auf die Rohrleitung (1) aufgesteckt wird, die Rohrleitung (1) in einem durch ein radiales Aufweiten der Rohrleitung (1) erzeugten Presssitz (17) in dem Rohrstutzen (2) fixiert wird und die entstandenen Rohrleitungseinheiten (16) axial durch Verspannen der Flanschabschnitte (9) der Rohrstutzen (2) zur Rohrleitungsanordnung (21) verspannt werden, **dadurch gekennzeichnet, dass** die Dichtung (13) einen Dichtungseinsatz (20) aufweist und nach dem Verspannen der Rohrleitungseinheiten (16) zur Rohrleitungsanordnung (21) einen definierten Übergang (22) zwischen den zwei miteinander verspannten Rohrleitungseinheiten (16) ausbildet, wobei der durch mittels des Dichtungseinsatzes (20) festgelegte Anpresskräfte definierte Übergang (22) so ausgebildet wird, dass eine Wölbung (28) gegenüber einem Rohrleitungsinnendurchmesser (18) einen stumpfen Winkel (α) bildet.

2. Verfahren nach Anspruch 1, **dadurch gekennzeichnet, dass** die Rohrleitung (1) und der Rohrstutzen (2) bereitgestellt werden, wobei der Rohrleitungsaußendurchmesser (4) größer ist als der Rohrstutzeninnendurchmesser (7), sodass unmittelbar beim Aufstecken des Rohrstutzens (2) auf die Rohrleitung (1) eine Presspassung erzeugt wird.

3. Verfahren nach Anspruch 1 oder 2, **dadurch gekennzeichnet, dass** vor dem Aufstecken des Rohrstutzens (2) auf die Rohrleitung (1) der Rohrstutzen (2) erwärmt und/oder die Rohrleitung (1) gekühlt wird oder umgekehrt.

4. Verfahren nach einem der vorhergehenden Ansprüche, **dadurch gekennzeichnet, dass** vor dem radialen Aufweiten der Rohrleitung (1) die Rohrabschnittsinnenoberfläche (10) und/oder die Rohrleitungsaußenoberfläche (4) zumindest teilweise strukturiert wird, sodass die Rohrleitung (1) unmittelbar nach einem durch ein radiales Aufweiten der Rohrleitung (1) erzeugten Presssitz (15) in dem Rohrstutzen (2) auch kraftschlüssig fixiert wird.

5. Verfahren nach einem der vorhergehenden Ansprüche, **dadurch gekennzeichnet, dass** der Dichtungseinsatz (20) konfiguriert ist, um einen axialen Mindestabstand (23) zwischen den zwei Rohrleitungseinheiten (16) während des Verspannens der Rohrleitungseinheiten (16) zur Rohrleitungsanordnung (21) zu definieren.

6. Rohrleitungsanordnung (21) umfassend zwei eine Rohrleitungsmittelachse (3) aufweisende Rohrleitungseinheiten (16), wobei die Rohrleitungseinheit (16) eine über eine Rohrleitungsaußenoberfläche (4), eine Rohrleitungsstirnfläche (5) und einen Rohrleitungsaußendurchmesser (6) verfügende Rohrleitung (1) und einen einen Rohrstutzeninnendurchmesser (7) aufweisenden Rohrstutzen (2), der über einen eine Flanschabschnittsstirnfläche (8) aufweisenden Flanschabschnitt (9) und einen eine Rohrabschnittsinnenoberfläche (10) aufweisenden Rohrabschnitt (11) verfügt, umfasst, einer axial zwischen den Flanschabschnittsstirnflächen (8) der Rohrstutzen (2) angeordneten Dichtung (13) und einer die Flanschabschnitte (9) der Rohrstutzen (2) der zwei Rohrleitungseinheiten (16) axial miteinander verspannenden Spanneinrichtung (24), wobei der Rohrstutzen (2) mindestens bis zu einer Bündigkeit der Flanschabschnittsstirnfläche (8) und der Rohrleitungsstirnfläche (5) auf die Rohrleitung (1) aufgesteckt ist und die Rohrleitung (1) in einem durch ein radiales Aufweiten der Rohrleitung (1) erzeugten Presssitz (17) in dem Rohrstutzen (2) fixiert ist, **dadurch gekennzeichnet, dass** die Dichtung (13) einen Dichtungseinsatz (20) aufweist und konfiguriert ist, um einen definierten Übergang (22) zwischen den zwei miteinander verspannten Rohrleitungseinheiten (16) auszubilden, wobei der durch mittels des Dichtungseinsatzes (20) festgelegte Anpresskräfte definierte Übergang (22) so ausgebildet ist, dass eine Wölbung (28) gegenüber einem Rohrleitungsinnendurchmesser (18) einen stumpfen Winkel (α) bildet.

7. Rohrleitungsanordnung (21) nach Anspruch 6, **dadurch gekennzeichnet, dass** der Rohrleitungsaußendurchmesser (6) und der Rohrstutzeninnendurchmesser (7) ausgebildet sind, um beim Aufstecken des Rohrstutzens (2) auf die Rohrleitung (1) eine Presspassung herzustellen.

8. Rohrleitungsanordnung (21) nach Anspruch 6 oder 7, **dadurch gekennzeichnet, dass** die Rohrabschnittsinnenoberfläche (10) und/oder die Rohrleitungsaußenoberfläche (4) zumindest teilweise strukturiert ist, sodass die Rohrleitung (1) in einem durch ein radiales Aufweiten der Rohrleitung (1) erzeugten Presssitz (17) in dem Rohrstutzen (2) auch formschlüssig fixiert ist.

9. Rohrleitungsanordnung (21) nach einem der Ansprüche 6 bis 8, **dadurch gekennzeichnet, dass** die Spanneinrichtung (24) als Gelenkklammer (25) ausgebildet ist.

10. Rohrleitungsanordnung (21) nach einem der Ansprüche 6 bis 9, **dadurch gekennzeichnet, dass** der Dichtungseinsatz (20) konfiguriert ist, um einen axialen Mindestabstand (23) zwischen den zwei Rohrleitungseinheiten (16) zu definieren.

11. Rohrleitungsanordnung (21) nach Anspruch 10, **dadurch gekennzeichnet, dass** der Dichtungseinsatz (20) eine als Anschlag (26) ausgebildete Dichtungseinsatzstirnfläche (27) aufweist.

## Claims

1. A method for manufacturing a pipe conduit arrangement (21) comprising two pipe conduit units (16) which have a pipe conduit middle axis (3), wherein the pipe conduit unit (16) comprises a pipe conduit (1) which has a pipe conduit outer surface (4), a pipe conduit end-face (5) and a pipe conduit outer diameter (6), and a pipe stub (2) which has a pipe stub inner diameter (7) and which comprises a flange section (9) and a pipe section (11), said flange section comprising a flange section end-face (8) and said pipe section comprising a pipe section inner surface (10), a seal (13) which is arranged axially between the flange section end-faces (8) of the pipe stubs (2), and a clamping device (24) which axially clamps the flange sections (9) of the pipe stubs (2) of the two pipe conduit units (16) to one another, **characterised in that** the pipe stub (2) is stuck onto the pipe conduit (1) at least up to a flush state of the flange section end-face (8) and the pipe conduit end-face (5), the pipe conduit (1) is fixed in the pipe stub (2) in a press fit (17) which is produced by the radial widening of the pipe conduit (1) and the arisen pipe conduit units (16) are axially clamped by way of clamping the flange sections (9) of the pipe stubs (2) into the pipe conduit arrangement (21), **characterised in that** the seal (13) comprises a seal insert (20) and after the clamping of the pipe conduit units into the pipe conduit arrangement (21), the seal (13) forms defined transition (22) between the two pipe conduit units (16) which are clamped to one another, wherein the transition (22) which is defined by the pressing forces which are set by the seal insert (20) is formed such that the arching (28) with respect to a pipe conduit inner diameter (18) forms an obtuse angle (α).

2. The method according to claim 1, **characterised in that** the pipe conduit (1) and the pipe stub (2) are provided, wherein the pipe conduit outer diameter (4) is larger than the pipe stub inner diameter (7), so that a press fit is produced directly on sticking the pipe stub (2) onto the pipe conduit (1) .

3. The method according to claim 1 or 2, **characterised in that** before sticking the pipe stub (2) onto the pipe conduit (1), the pipe stub (2) is heated and/or the pipe conduit (1) cooled or vice versa.

4. The method according to one of the preceding claims, **characterised in that** the pipe section inner surface (10) and/or the pipe conduit outer surface (4) is at least partly structured, before the radial widening of the pipe conduit (10), so that directly after a press fit (15) which is created by a radial widening of the pipe conduit (1), the pipe conduit (1) is also non-positively fixed in the pipe stub (2).

5. The method according to one of the preceding claims, **characterised in that** the seal insert (20) is configured to define an axial minimum distance (23) between the two pipe conduit units (16) during the clamping of the pipe conduit units (16) into the pipe conduit arrangement (21).

6. A pipe conduit arrangement (21) comprising two pipe conduit units (16) which have a pipe conduit middle axis (13), wherein the pipe conduit unit (16) comprises a pipe conduit (1) which has a pipe conduit outer surface (4), a pipe conduit end-face (5) and a pipe conduit outer diameter (6), and a pipe stub (2) which has a pipe stub outer diameter (7) and which comprises a flange section (9) and a pipe section (11), said flange section having a flange section end-face (8) and said pipe section having a pipe section inner surface (10), a seal (13) which is arranged axially between the flange section end-faces (8) of the pipe stubs (2), and a clamping device (24) which axially clamps the flange sections (9) of the pipe stubs (2) of the two pipe conduit units (16) to one another, **characterised in that** the pipe stub (2) is stuck onto the pipe conduit (1) at least up to a flush state of the flange section end-face (8) and the pipe conduit end-face (5), and the pipe conduit (1) is fixed in the pipe stub (2) in a press fit which is produced by the radial widening of the pipe conduit (1), **characterised in that** the seal (13) comprises a seal insert (20) and after the clamping of the pipe conduit units into the pipe conduit arrangement (21), the seal (13) forms defined transition (22) between the two pipe conduit units (16) which are clamped to one another, wherein the transition (22) which is defined by the pressing forces which are set by the seal insert (20) is formed such that the arching (28) with respect to a pipe conduit inner diameter (18) forms an obtuse angle (α) .

7. The pipe conduit arrangement (21) according to claim 6, **characterised in that** the pipe conduit outer diameter (6) and the pipe stub inner diameter (7) are designed in order to create a press fit on sticking the pipe stub (2) onto the pipe conduit (1).

8. The pipe conduit arrangement (21) according to claim 6 or 7, **characterised in that** the pipe section inner surface (10) and/or the pipe conduit outer surface (4) is at least partly structured, so that the pipe conduit (1) is also positively fixed in the pipe stub (2) in a press fit (17) which is created by a radial widening of the pipe conduit (1).

9. The pipe conduit arrangement (1) according to one of the claims 6 to 8, **characterised in that** the clamping device (24) is designed as a joint clamp (23).

10. The pipe conduit arrangement (21) according to one of the claims 6 to 9, **characterised in that** the seal insert (20) is configured to define an axial minimum distance (23) between the two pipe conduit units (16).

11. The pipe conduit arrangement (21) according to claim 10, **characterised in that** the seal insert (20) comprises a seal insert end-face (27) which is designed as a stop (26).

## Revendications

1. Procédé pour la fabrication d'un ensemble de conduites (21) comprenant deux unités de conduite (16) présentant un axe médian de conduite (3), dans lequel l'unité de conduite (16) comprend une conduite (1) disposant d'une surface extérieure de conduite (4), d'une surface frontale de conduite (5) et d'un diamètre extérieur de conduite (6) et une tubulure (2) présentant un diamètre intérieur de tubulure (7), qui dispose d'une partie formant bride (9) présentant une surface frontale de partie formant bride (8) et une partie tubulaire (11) présentant une surface intérieure de partie tubulaire (10), d'un joint d'étanchéité (13) disposé axialement entre les surfaces frontales de partie formant bride (8) des tubulures (2) et d'un dispositif de serrage (24) serrant axialement les parties formant bride (9) des tubulures (2) des deux unités de conduite (16) l'une avec l'autre, dans lequel la tubulure (2) est emboîtée sur la conduite (1) au moins jusqu'à un affleurement de la surface frontale de partie formant bride (8) et de la surface frontale de conduite (5), la conduite (1) est fixée dans la tubulure (2) dans un ajustement serré (17) produit par un élargissement radial de la conduite (1) et les unités de conduite (16) obtenues sont serrées axialement par serrage des parties formant bride (9) des tubulures (2) en l'ensemble de conduite (21), **caractérisé en ce que** le joint d'étanchéité (13) présente un insert de joint d'étanchéité (20) et après le serrage des unités de conduite (16) en l'ensemble de conduite (21) réalise un passage (22) défini entre les deux unités de conduite (16) serrées l'une avec l'autre, dans lequel le passage (22) défini par des forces de pression établies au moyen de l'insert de joint d'étanchéité (20) est réalisé de sorte qu'une courbure (28) par rapport à un diamètre intérieur de conduite (18) forme un angle obtus (α).

2. Procédé selon la revendication 1, **caractérisé en ce que** la conduite (1) et la tubulure (2) sont fournies, dans lequel le diamètre extérieur de conduite (4) est supérieur au diamètre intérieur de tubulure (7), de sorte qu'un ajustement avec serrage est produit directement lors de l'emboîtement de la tubulure (2) sur la conduite (1).

3. Procédé selon la revendication 1 ou 2, **caractérisé en ce qu'**avant l'emboîtement de la tubulure (2) sur la conduite (1) la tubulure (2) est chauffée et/ou la conduite (1) est refroidie ou inversement.

4. Procédé selon l'une quelconque des revendications précédentes, **caractérisé en ce qu'**avant l'élargissement radial de la conduite (1) la surface intérieure de partie tubulaire (10) et/ou la surface extérieure de conduite (4) est structurée au moins en partie, de sorte que la conduite (1) est fixée dans la tubulure (2) également à force directement après un ajustement serré (15) produit par un élargissement radial de la conduite (1).

5. Procédé selon l'une quelconque des revendications précédentes, **caractérisé en ce que** l'insert de joint d'étanchéité (20) est configuré pour définir un écart minimal axial (23) entre les deux unités de conduite (16) pendant le serrage des unités de conduite (16) en l'ensemble de conduite (21).

6. Ensemble de conduite (21) comprenant deux unités de conduite (16) présentant un axe médian de conduite (3), dans lequel l'unité de conduite (16) comprend une conduite (1) disposant d'une surface extérieure de conduite (4), d'une surface frontale de conduite (5) et d'un diamètre extérieur de conduite (6) et une tubulure (2) présentant un diamètre intérieur de tubulure (7), qui dispose d'une partie formant bride (9) présentant une surface frontale de partie formant bride (8) et une partie tubulaire (11) présentant une surface intérieure de partie tubulaire (10), d'un joint d'étanchéité (13) disposé axialement entre les surfaces frontales de partie formant bride (8) des tubulures (2) et d'un dispositif de serrage (24) serrant axialement les parties formant bride (9) des tubulures (2) des deux unités de conduite (16) l'une avec l'autre, dans lequel la tubulure (2) est emboîtée sur la conduite (1) au moins jusqu'à un affleurement de la surface frontale de partie formant bride (8) et de la surface frontale de conduite (5) et la conduite (1) est fixée dans la tubulure (2) dans un ajustement serré (17) produit par un élargissement radial de la conduite (1), **caractérisé en ce que** le joint d'étanchéité (13) présente un insert de joint d'étanchéité (20) et est configuré pour réaliser un passage (22) défini entre les deux unités de conduite (16) serrées l'une avec l'autre, dans lequel le passage (22) défini par des forces de pression établies au moyen de l'insert de joint d'étanchéité (20) est réalisé de sorte qu'une courbure (28) forme par rapport à un diamètre intérieur de conduite (18) un angle obtus (α).

7. Ensemble de conduite (21) selon la revendication 6, **caractérisé en ce que** le diamètre extérieur de conduite (6) et le diamètre intérieur de tubulure (7) sont réalisés pour produire un ajustement avec serrage lors de l'emboîtement de la tubulure (2) sur la conduite (1).

8. Ensemble de conduite (21) selon la revendication 6 ou 7, **caractérisé en ce que** la surface intérieure de partie tubulaire (10) et/ou la surface extérieure de conduite (4) est structurée au moins en partie, de sorte que la conduite (1) est fixée également par coopération de formes dans la tubulure (2) dans un ajustement serré (17) produit par un élargissement radial de la conduite (1).

9. Ensemble de conduite (21) selon l'une quelconque des revendications 6 à 8, **caractérisé en ce que** le dispositif de serrage (24) est réalisé en tant qu'attache articulée (25).

10. Ensemble de conduite (21) selon l'une quelconque des revendications 6 à 9, **caractérisé en ce que** l'insert de joint d'étanchéité (20) est configuré pour définir un écart minimal axial (23) entre les deux unités de conduite (16).

11. Ensemble de conduite (21) selon la revendication 10, **caractérisé en ce que** l'insert de joint d'étanchéité (20) présente une surface frontale d'insert de joint d'étanchéité (27) réalisée en tant que butée (26).
